# EUROPÄISCHE PATENTSCHRIFT

(11) **EP 1 736 266 B1**
(45) Veröffentlichungstag und Bekanntmachung des Hinweises auf die Patenterteilung: **10.12.2008**
(21) Anmeldenummer: 05013556.5
(22) Anmeldetag: 23.06.2005
(51) Int. Cl.: B23C 5/20

(54) **Schneideinsatz**
Cutting insert
Plaquette de coupe

(43) Veröffentlichungstag der Anmeldung: 27.12.2006
(73) Patentinhaber: Hartmetall-Werkzeugfabrik Paul Horn GmbH, 72072 Tübingen (DE)
(72) Erfinder: Luik, Matthias, Dipl.-Ing., 72766 Reutlingen (DE)
(74) Vertreter: Witte, Weller & Partner

(56) Entgegenhaltungen:
- EP-A- 0 699 495
- EP-A- 0 799 664
- EP-A- 0 925 863
- EP-A- 1 344 595
- DE-A1- 10 144 735

## Beschreibung

Die Erfindung betrifft einen Schneideinsatz mit mindestens einer Schneidkante, die in einem schrägen Kantenverlauf in einer Spitze eines Schneidkörpers ausmündet, der von seinem Bodenteil ausgehend in Richtung einer Begrenzungslinie zur Spitze hin konvex gekrümmt ausgebildet ist, gemäß der Merkmalsausgestaltung des Oberbegriffes des Patentanspruches 1.

Durch die DE 101 44 735 B4 ist ein Schneideinsatz für einen rotierenden Umfangsfräser zum Seitwärtsfräsen und Bohren mit einem den Schneideinsatz austauschbar aufnehmenden Halter bekannt, wobei der Schneideinsatz mit mindestens einer Schneidkante ausgebildet ist, die zwischen einer Schneidspanfläche und einer Freiflankenfläche des Schneideinsatzes definiert ist. Bei der bekannten Lösung ist die Schneidkante entlang einer dreidimensionalen Raumkurve konkav gekrümmt, wobei die Raumkurve ein Teil einer Schnittkurve zweier Mantelflächen sich durchdringender Körper ist, wobei der erste Körper ein Zylinder ist, der durch die Umdrehungsfläche der Schneidkante am rotierenden Umfangsfräser definiert ist und der zweite Körper ist gleichfalls als weiterer Zylinderkörper definiert.

Durch die bekannte Schneidkantengestaltung eines Schneideinsatzes wird die einseitige Abnutzung der Schneidkante an einigen Stellen, welche insbesondere an den den Werkstücken zugewandten Enden beobachtet werden kann, vermieden, da durch eine geeignete Wahl der Raumkurve bzw. der die Raumkurve bestimmenden Körper eine gleichmäßige Abnutzung gewährleistet ist. Hierdurch verlängert sich unter anderem die Standzeit der Schneidplatte, was zu einer Kostenersparnis bei der Bearbeitung führt.

Durch die EP-A-0 799 664 ist ein gattungsgemäßer Schneideinsatz bekannt, mit mindestens einer Schneidkante, die in einem schrägen Kantenverlauf gegenüber einer parallelen Fläche zum Bodenteil eines Schneidkörpers in eine Spitze des Schneidkörpers mündet, der in der Art einer Wendeschneidplatte ausgebildet ist, und der von seinem Bodenteil ausgehend in Richtung einer Begrenzungslinie zur Spitze hin konvex gekrümmt ausgebildet ist, wobei der schräge Kantenverlauf in einer Ebene geradlinig ausgebildet ist, wobei der Schneidkörper unterhalb der Schneidkante in Richtung seines Bodenteils über eine vorgebbare Wegstrecke ein konvex gekrümmtes Wandteil aufweist, längs dessen Krümmung die Schneidkante in einer weiteren Ebene nachfolgt, und wobei die jeweilige Schneidkante von der Spitze kommend in ein Tal des Schneidkörpers ausmündet, an das sich eine benachbarte Schneidkante anschließt. Die bekannte gattungsgemäße Lösung betrifft einen Schneideinsatz, mit rechtwinkliger Parallelepipedgestaltung.

Ausgehend von diesem Stand der Technik liegt der Erfindung die Aufgabe zugrunde, eine Schneideinsatzlösung zu schaffen, mit der sich insbesondere unterschiedlichste Fräsoperationen ausführen lassen, insbesondere ein Tauchfräsverfahren mit beliebig vorgebbaren Schrägwinkeln in das zu bearbeitende Werkstück durchführen lässt. Eine dahingehende Aufgabe löst ein Schneideinsatz mit den Merkmalen des Patentanspruches 1 in seiner Gesamtheit.

Dadurch, dass gemäß dem kennzeichnenden Teil des Patentanspruches 1 die Schneidkante quer zur Talrichtung mit der jeweils benachbarten Schneidkante einen stumpfen Winkel begrenzt und dass der Schneidkörper mit drei voreilenden Spitzen und insgesamt sechs Schneidkanten ausgestattet ist, ergibt sich zum einen für den Schneideinsatz eine kompakte Bauweise und durch die gekrümmten Wandteilflächen des Schneidkörpers, die insbesondere durch einen Bogenschliff erhalten werden können, ergeben sich sehr stabile Verhältnisse für die jeweilige Schneidkante, die insoweit der konvexen Krümmung des zuordenbaren Wandteils nachfolgt. Ferner ergibt sich durch die konvexe Krümmung für die jeweilige Schneidkante eine Art Drallwinkel mit sich hieraus ergebenden verbesserten Schnittbedingungen.

Da der schräge Kantenverlauf in der einen Ebene geradlinig ausgebildet ist, ist insoweit der erfindungsgemäße Schneideinsatz einfach und kostengünstig herstellbar. Durch den angesprochenen schrägen und geradlinigen Kantenverlauf quer zur balligen Anordnung der Schneidkante über die konvexe Wölbung ist eine Art positiv vorauseilende Schneide für alle sechs Schneidkanten gebildet, was wiederum die Zerspanbedingungen verbessert. Ferner ergibt sich hierdurch die Möglichkeit, durch die positiv vorauseilende Schneidengeometrie den Schneideinsatz bei Umfangsfräsern zum Einsatz zu bringen, die dann zum Durchführen eines Tauchfräsverfahrens in beliebig vorgebbaren Schrägwinkeln in das zu bearbeitende Werkstück eintauchen können.

Darüber hinaus sind mit dem erfindungsgemäßen Schneideinsatz weitere Bearbeitungsfälle abzudecken, wie Planfäsen, Taschenfräsen, Aufweiten und dergleichen mehr. Im Werkzeugformenbau stellt das Verfahren "Fräsen" zwischenzeitlich das überwiegend eingesetzte Verfahren dar. Um demgemäß Bearbeitungszeiten und -kosten gering halten zu können, müssen universelle Werkzeuge eingesetzt werden, welche für verschiedenste Bearbeitungsaufgaben ausgelegt sind. Große Zeitspanvolumina bei der Schrupp- und Schlichtbearbeitung erfordern den Einsatz von Fräswerkzeugen auch im größeren Durchmesserbereich. Mit der erfindungsgemäßen Schneideinsatzlösung mit drei voreilenden Spitzen und insgesamt sechs Schneidkanten wird den dahingehenden Anforderungen im modernen Werkzeugformenbau Rechnung getragen.

Weitere vorteilhafte Ausführungsformen des erfindungsgemäßen Schneideinsatzes sind Gegenstand der sonstigen Unteransprüche.

Im folgenden wird der erfindungsgemäße Schneideinsatz anhand eines Ausführungsbeispiels nach der Zeichnung näher erläutert. Dabei zeigen in prinzipieller und nicht maßstäblicher Darstellung die
- Fig. 1: in perspektivischer Draufsicht den Schneideinsatz als Ganzes;
- Fig.2: den in einer Tasche eines Fräswerkzeuges aufgenommenen Schneideinsatz nach der Fig.1.

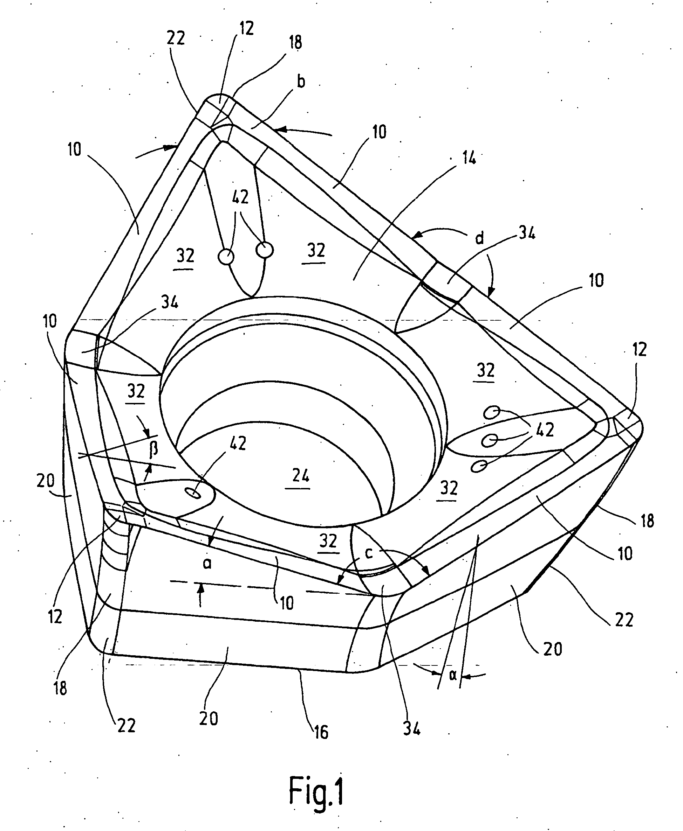

Der in Fig.1 dargestellte Schneideinsatz ist mit sechs Schneidkanten 10 versehen, die in einem schrägen Kantenverlauf in einer oben liegenden Ebene jeweils in einer Spitze 12 eines Schneidkörpers 14 ausmünden. Der Schneidkörper 14 ist von seinem Bodenteil 16, das eben verlaufend ausgebildet ist, in Richtung dreier Begrenzungslinien 18 zur jeweils zuordenbaren Spitze hin konvex gekrümmt ausgebildet. Sofern die jeweilige Spitze 12 nebst Begrenzungslinie 18 angesprochen sind, sind diese gemäß der Darstellung nach der Fig.1 in ihrem jeweiligen Verlauf ballig abgerundet.

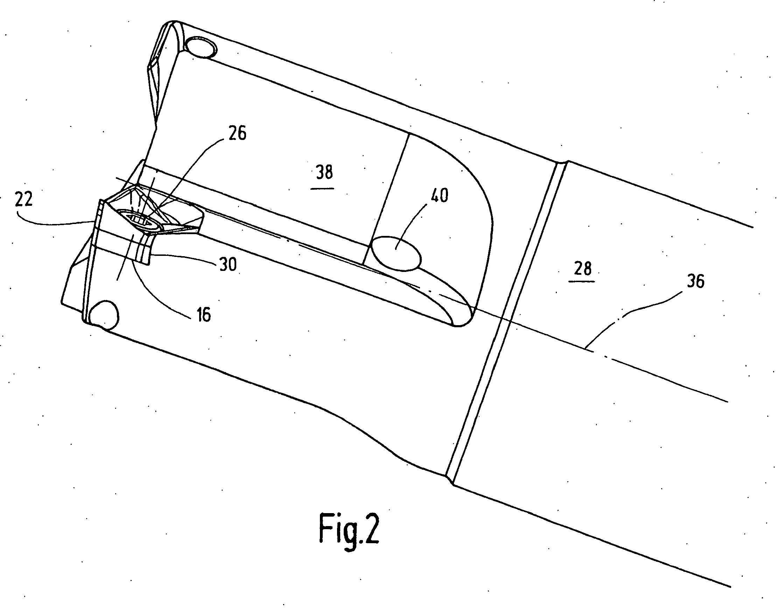

Wie sich des weiteren aus den Fig. 1 und 2 ergibt, ist der jeweilige schräge Kantenverlauf der Schneidkante 10 geradlinig ausgebildet und der schräge Kantenverlauf steigt um einen Winkel a von ca. 20° gegenüber einer parallelen Fläche zum Bodenteil 16 des Schneidkörpers 14 an. Es wären hier auch andere Anstiegswinkel denkbar in der Größenordnung von 15° bis 40° je nach Schneidaufgabe für den Schneideinsatz. Insoweit weist die erfindungsgemäße Schneideinsatzlösung für die jeweilige Schneidkante 10 im Bereich der Oberseite des Schneidkörpers 14 keinen konkav-bogenförmigen, sondern einen geradlinigen Verlauf auf, was die Herstellung vereinfachen hilft. Der Schneidkörper 14 ist unterhalb einer jeden Schneidkante 10 in Richtung seines Bodenteils 16 über eine vorgebbare Wegstrecke mit einem konvex gekrümmten Wandteil 20 versehen, längs dessen Krümmung die jeweilige Schneidkante 10 in einer weiteren, seitlich angeordneten Ebene nachfolgt und insofern nach außen hin konvex gekrümmt ist bzw. eine ballige Form einnimmt. Durch die ballige Form für die Schneidkanten 10 ergibt sich eine Art Drallwinkel mit verbesserten Schnittbedingungen und durch den Bogenschliff für das jeweilige Wandteil 20 ist eine stabilere Schneidgeometrie im Bereich der jeweiligen Schneidkante 10 erreicht. Insgesamt ergibt sich für den Schneideinsatz eine kompakte Bauweise, bei der die Höhe der jeweiligen Spitze 12 gegenüber dem Bodenteil 16 der Breite eines Wandteils 20 gemessen in der Höhe des Bodenteils 16 entspricht, so dass sich für das Gesamtwerkzeug eine Art stabile Kronenform ergibt, die eingeleitete Schneidkräfte über das Bodenteil 16 gleichförmig in das Fräswerkzeug gemäß der Darstellung nach der Fig.2 ableiten hilft.

Ferner läßt sich der erfindungsgemäße Schneideinsatz in Abhängigkeit der balligen Ausgestaltung im Bereich der jeweiligen Spitze 12 mit verschiedenen Schneideckenradien versehen, so dass die erfindungsgemäße Schneideinsatzlösung an verschiedenste zu bearbeitende Werkstückgeometrien anpaßbar ist. Insbesondere ist der Schneideinsatz an verschiedene Durchmesser ab Werkzeugdurchmesser von 16mm anpaßbar. Da die Spitzen 12 selbst gleichfalls spanende Eigenschaften besitzen, weist die erfindungsgemäße Schneideinsatzlösung in einem jeden wirksamen Eckbereich 22 drei Schneiden in axialer und radialer Richtung wirkend auf in Form zweier benachbarter Schneidkanten 10, die in eine zuordenbare Spitze 12 ausmünden. Insgesamt ergibt sich hierdurch eine Art trigonförmige Platte mit einem 90° Eckwinkel, eingeschlossen zwischen zwei benachbarten Schneidkanten 10 eines jeden Eckbereichs 22 gemessen an der eingeschlossenen Spitze 12. Dergestalt läßt sich mit dem 90° Eckwinkel ein Eckfräsverfahren durchführen. Der dahingehende Eckwinkel ist in Blickrichtung auf die Fig.1 gesehen exemplarisch oben als fiktiver Winkel b eingetragen.

Wie des weiteren die Figuren zeigen, ist der Schneidkörper 14 mit einer zylindrischen Durchgriffsöffnung 24 versehen für den Durchgriff eines Festlegemittels in Form einer Innensechskantschraube 26 gemäß der bildlichen Darstellung nach der Fig.2. Anstelle der genannten Innensechskantschraube können auch sog. Torx-Schrauben zum Einsatz kommen. Die dahingehende Innensechskantschraube 26 weist einen geringen seitlichen Versatz gegenüber den zugehörigen Gewindegängen im Halter 28 des Fräswerkzeuges auf, so dass insoweit beim Festlegen des Schneidkörpers am Plattensitz 30 des Halters 28 sich die balligen Wandteile 20 gegen die ebenen Anlageflächen am Plattensitz 30 anpressen, so dass insoweit längs von ballig geformten Anlagesegmenten die Abstützung des Schneideinsatzes im Halter 28 erfolgt, was zu einer exakten Selbstzentrierung führt mit günstigen Einflüssen für die Bearbeitungsgenauigkeit.

Ferner geht, wie bei dahingehenden Wendeschneidplatten üblich, die jeweilige Schneidkante 10 unter Bildung eines Spanwinkels β in eine Spanfläche 32 über, die mit einem konkaven Flächenverlauf in die Durchgriffsöffnung 24 ausmündet. Neben dem Spanwinkel β ist ein Freiwinkel α definiert, gebildet durch eine an der Vorderseite der Schneidkante 10 angreifende Vertikale gegenüber einer Tangente, angelegt an der ballig zurückgesetzten Fläche des Wandteils 20 (Fig.1). Dergestalt ist stirnseitig ein entsprechender Freiwinkel α durch die Gesamtlösung geschaffen sowie ein angepaßter Spanwinkel β stirnseitig und radial vorhanden.

Aufgrund des Schrägverlaufs einer jeden Schneidkante 10 mündet diese von der Spitze 12 kommend in ein Tal 34 aus, an das sich dann entsprechend eine benachbarte Schneidkante 10 anschließt, die quer zur Talrichtung mit der benachbarten Schneidkante 10 einen stumpfen Winkel c von etwa 130° bis 150°, vorzugsweise von 140°, einschließt. Das dahingehende Winkelmaß gilt auch für den stumpfen Außenwinkel d im Bereich eines jeden Tals 34, wobei vorzugsweise der Winkel c in der Größe gleich dem Winkel d gewählt ist. Aufgrund des eben angeordneten Bodenteils 16 ist eine ebene Auflage an der Unterseite des Plattensitzes 30 des Halters 28 möglich, so dass insoweit eine Plattensitzauflage parallel zur Werkzeugachse 36 des Halters 28 erreicht ist.

In einer segmentförmigen Ausnehmung 38 weist dieser Halter 28 einen Kühlmittelaustritt 40 auf für die Versorgung der aktiven Schneiden des eingesetzten Schneideinsatzes. Wie die Fig.2 des weiteren verdeutlicht, können mehrere, beispielsweise drei, Schneideinsätze außenumfangsseitig an der Vorderseite des Halters 28 angeordnet sein. Der Schneideinsatz ist in der Art einer Wendeschneidplatte ausgebildet, so dass bei jeweils im Einsatz verbrauchten Schneidgeometrien diese durch Wechseln der Platte austauschbar sind. Für die dahingehende Plausibilitätsüberprüfung weist der Schneidkörper 14 an seiner Oberseite eine Kennzeichnung, vorzugsweise in Form von punktförmigen Vorsprüngen 42 auf, die einem jeden wirksamen Eckbereich 22 zugeordnet sind. Dergestalt ist beim Austauschen des Schneideinsatzes oder beim Wechseln der Eckbereiche 22 für einen Schneideinsatz für eine Bedienperson die Handhabung deutlich vereinfacht.

Der Halter 28 läßt sich mittels einer geeigneten Bearbeitungseinrichtung (CNC-gestaltete Werkzeugmaschine) für vielseitigste Bearbeitungsaufgaben einsetzen, beispielsweise für Planfräsen, Taschenfräsen, Aufweiten, Tauchfräsen etc.. Ferner können in Abhängigkeit des gewünschten Bearbeitungsdurchmessers alle gängigen Schaftabmessungen für den Halter 28 zum Einsatz kommen. Insoweit ist auch die eingesetzte Anzahl an Wendeschneidplatten in Form des Schneideinsatzes abhängig vom angesprochenen Durchmesser des Halters 28.

## Patentansprüche

1. Schneideinsatz mit mindestens einer Schneidkante (10), die in einem schrägen Kantenverlauf gegenüber einer parallelen Fläche zum Bodenteil (16) eines Schneidkörpers (14) in einer Spitze (12) des Schneidkörpers (14) ausmündet, der in der Art einer Wendeschneidplatte ausgebildet ist, und der von seinem Bodenteil (16) ausgehend in Richtung einer Begrenzungslinie (18) zur Spitze (12) hin konvex gekrümmt ausgebildet ist, wobei der schräge Kantenverlauf in einer Ebene geradlinig ausgebildet ist, wobei der Schneidkörper (14) unterhalb der Schneidkante (10) in Richtung seines Bodenteils (16) über eine vorgebbare Wegstrecke ein konvex gekrümmtes Wandteil (20) aufweist, längs dessen Krümmung die Schneidkante (10) in einer weiteren Ebene nachfolgt, und wobei die jeweilige Schneidkante (10) von der Spitze (12) kommend in ein Tal (34) des Schneidkörpers (14) ausmündet, an das sich eine benachbarte Schneidkante (10) anschließt, **dadurch gekennzeichnet, dass** die Schneidkante (10) quer zur Talrichtung mit der jeweils benachbarten Schneidkante (10) einen stumpfen Winkel (c) begrenzt und dass der Schneidkörper (14) mit drei voreilenden Spitzen (12) und insgesamt sechs Schneidkanten (10) ausgestattet ist.

2. Schneideinsatz nach Anspruch 1, **dadurch gekennzeichnet, dass** der Schneidkörper (14) eine Durchgriffsöffnung (24) aufweist für den Durchgriff eines Festlegemittels (26) und dass die Schneidkante (10) unter Bildung des Spanwinkels (β) in eine Spanfläche (32) übergeht, die mit einem konkaven Flächenverlauf in die Durchgriffsöffnung (24) ausmündet.

3. Schneideinsatz nach Anspruch 1 oder 2, **dadurch gekennzeichnet, dass** zur Spitze (12) des Schneidkörpers (14) sich benachbart an die Schneidkante (10) eine weitere Schneidkante (10) vergleichbarer Geometrie anschließt und dass die beiden benachbarten Schneidkanten (10) einen vorgebbaren Winkel (b) miteinander einschließen.

4. Schneideinsatz nach Anspruch 3, **dadurch gekennzeichnet, dass** der vorgebbare Winkel (b) zwischen den benachbarten Schneidkanten (10) etwa 90° beträgt.

5. Schneideinsatz nach einem der Ansprüche 1 bis 4, **dadurch gekennzeichnet, dass** der Wert des stumpfen Winkels (c) etwa 130° bis 150°, vorzugsweise 140°, beträgt.

6. Schneideinsatz nach einem der Ansprüche 1 bis 5, **dadurch gekennzeichnet, dass** die in der weiteren Ebene jeweils schräg ansteigende Schneidkante (10) gegenüber einer parallelen Fläche des Bodenteils (16) des Schneidkörpers (14) einen Winkel (a) von 15° bis 40°, vorzugsweise von etwa 20°, einschließt.

7. Schneideinsatz nach einem der Ansprüche 1 bis 6, **dadurch gekennzeichnet, dass** die jeweilige Spitze (12) zumindest an den Stellen des Überganges von benachbart angeordneten Schneidkanten (10) verrundet ist.

## Claims

1. Cutting insert having at least one cutting edge (10) which, with an oblique edge progression relative to a surface parallel to the base part (16) of a cutting body (14), leads out in a tip (12) of the cutting body (14), which cutting insert is designed like an indexable insert and is designed to be convexly curved, starting from its base part (16), in the direction of a boundary line (18) towards the tip (12), wherein the oblique edge progression is designed to be rectilinear in one plane, wherein the cutting body (14) has a convexly curved wall part (20) below the cutting edge (10) in the direction of its base part (16) over a predeterminable distance, along the curvature of which wall part (20) the cutting edge (10) follows in a further plane, and wherein the respective cutting edge (10), coming from the tip (12), leads out into a valley (34) of the cutting body (14), adjoining which valley (34) is an adjacent cutting edge (10), **characterized in that** the cutting edge (10), transversely to the valley direction, defines an obtuse angle (c) with the respectively adjacent cutting edge (10), and **in that** the cutting body (14) is provided with three leading tips (12) and a total of six cutting edges (10).

2. Cutting insert according to Claim 1, **characterized in that** the cutting body (14) has a through-opening (24) for a fixing means (26) to pass through, and **in that** the cutting edge (10), while forming the rake angle (β), merges into a rake face (32) which leads out with a concave surface progression into the through-opening (24).

3. Cutting insert according to Claim 1 or 2, **characterized in that** a further cutting edge (10) of comparable geometry adjoins the cutting edge (10) towards the tip (12) of the cutting body (14), and **in that** the two adjacent cutting edges (10) enclose a predeterminable angle (b) with one another.

4. Cutting insert according to Claim 3, **characterized in that** the predeterminable angle (b) between the adjacent cutting edges (10) is about 90°.

5. Cutting insert according to one of Claims 1 to 4, **characterized in that** the value of the obtuse angle (c) is about 130° to 150°, preferably 140°.

6. Cutting insert according to one of Claims 1 to 5, **characterized in that** the cutting edge (10) rising obliquely in each case in the further plane encloses an angle (a) of 15° to 40°, preferably of about 20°, relative to a parallel surface of the base part (16) of the cutting body (14).

7. Cutting insert according to one of Claims 1 to 6, **characterized in that** the respective tip (12) is rounded at least at the locations of the transition from adjacently arranged cutting edges (10).

## Revendications

1. Insert de coupe comprenant au moins une arête de coupe (10), qui se termine, suivant une allure d'arête oblique par rapport à une surface parallèle à la partie de base (16) d'un corps de coupe (14), par une pointe (12) du corps de coupe (14), qui est réalisée à la manière d'une plaquette de coupe amovible, et qui est réalisée avec une courbure convexe depuis sa partie de base (16) dans la direction d'une ligne de limite (18) vers la pointe (12), le corps de coupe (14) présentant, sous l'arête de coupe (10), dans la direction de sa partie de fond (16) une partie de paroi (20) de courbure convexe sur une distance prédéfinissable, l'arête de coupe (10) se poursuivant le long de la courbure de ladite partie de paroi dans un autre plan, et l'arête de coupe respective (10) se terminant depuis la pointe (12) dans un creux (34) du corps de coupe (14) auquel se raccorde une arête de coupe (10) adjacente, **caractérisé en ce que** l'arête de coupe (10) délimite un angle obtus (c) transversal à la direction du creux avec l'arête de coupe (10) respectivement adjacente, et **en ce que** le corps de coupe (14) est muni de trois pointes en position avancée (12) et dans l'ensemble de six arêtes de coupe (10).

2. Insert de coupe selon la revendication 1, **caractérisé en ce que** le corps de coupe (14) présente une ouverture de traversée (24) pour le passage d'un moyen de fixation (26) et **en ce que** l'arête de coupe (10) se prolonge par une surface d'enlèvement de copeaux (32) en formant l'angle de coupe (β) qui se termine avec une allure de surface concave dans l'ouverture de traversée (24).

3. Insert de coupe selon la revendication 1 ou 2, **caractérisé en ce qu'**une autre arête de coupe (10) de géométrie comparable se raccorde à la pointe (12) du corps de coupe (14) à proximité de l'arête de coupe (10), et **en ce que** les deux arêtes de coupe adjacentes (10) forment entre elles un angle prédéfinissable (b).

4. Insert de coupe selon la revendication 3, **caractérisé en ce que** l'angle prédéfinissable (b) entre les arêtes de coupe adjacentes (10) vaut environ 90°.

5. Insert de coupe selon l'une quelconque des revendications 1 à 4, **caractérisé en ce que** la valeur de l'angle obtus (c) est comprise entre environ 130° et 150°, de préférence 140°.

6. Insert de coupe selon l'une quelconque des revendications 1 à 5, **caractérisé en ce que** l'arête de coupe (10) inclinée obliquement dans l'autre plan forme par rapport à une surface parallèle de la partie de base (16) du corps de coupe (14) un angle (a) de 15° à 40°, de préférence d'environ 20°.

7. Insert de coupe selon l'une quelconque des revendications 1 à 6, **caractérisé en ce que** la pointe respective (12) est arrondie au moins aux endroits de la transition entre des arêtes de coupe adjacentes (10).
